# EUROPEAN PATENT APPLICATION

(11) **EP 1 927 510 A2**
(43) Date of publication of application: **04.06.2008**
(21) Application number: 07254524.7
(22) Date of filing: 21.11.2007
(51) Int. Cl.: B60Q 1/32, B60Q 1/30, B60Q 7/00

(54) **Removable vehicle signaling device**

(30) Priority: 28.11.2006 US 564240
(71) Applicant: PACCAR INC., Bellevue, WA 98804 (US)
(72) Inventor: Plummer, Lew, Mount Vernon, WA 98273 (US); Woodrich, Steven A., Mount Vernon, WA 98273 (US); Farmer, Daniel J., La Conner, WA 98257 (US)
(74) Representative: Tranter, Andrew David

(57) **Abstract**

A signaling device (8) for temporary use with a vehicle is provided. The signaling device includes a housing (32) and an energy source (50) disposed within the housing. The signaling device (8) also includes a light emitting source (36) in electrical communication with the energy source and a coupler (70) attached to the housing. The coupler (70) is adapted to releasably attach the signaling device to the exterior of the vehicle.

## Description

### BACKGROUND

Vehicles, such as boats, recreational vehicles, trailers, etc., are often parked for an extended period of time in an overnight lot, on the side of the road, or otherwise in a remote area. As such, it is desirable to provide lights positioned on the vehicle exterior as a warning or signal to others. As a non-limiting example, if a vehicle is parked at night, warning lights inform others of the vehicle location, and the risk of collision is thereby reduced.

Illuminated exterior lights normally place a substantial load on the vehicle battery when the engine is in an "off' condition. With the exterior lights drawing significant power from the vehicle battery, the vehicle is not likely to reliably start after being parked for a significant amount of time. In certain circumstances, such as one where the vehicle is disabled, it is desirable to have a temporary light source that is attachable to the vehicle as a warning apparatus. Based on the foregoing, a reliable, low-current exterior lighting system for a vehicle is desired.

### SUMMARY

A signaling device for temporary use with a vehicle is provided. The signaling device includes a housing and an energy source disposed within the housing. The signaling device also includes a light emitting source in electrical communication with the energy source and a coupler attached to the housing. The coupler is adapted to releasably attach the signaling device to the exterior of the vehicle.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this disclosure will become better understood by reference to the following detailed description, when taken in conjunction with the accompanying drawings, wherein:
FIGURE 1 is a side planar view of a vehicle having a plurality of signaling devices constructed in accordance with one embodiment of the present disclosure;
FIGURE 2 is a partial cross-sectional view of a signaling device formed in accordance with one embodiment of the present disclosure;
FIGURE 3 is an exploded view of the signaling device of FIGURE 2;
FIGURE 4 is a side planar view of the signaling device having an attachment device constructed in accordance with one embodiment of the present disclosure; and
FIGURE 5 is a bottom planar view of the signaling device of FIGURE 4 and taken substantially through Section 5-5 of FIGURE 4.

### DETAILED DESCRIPTION

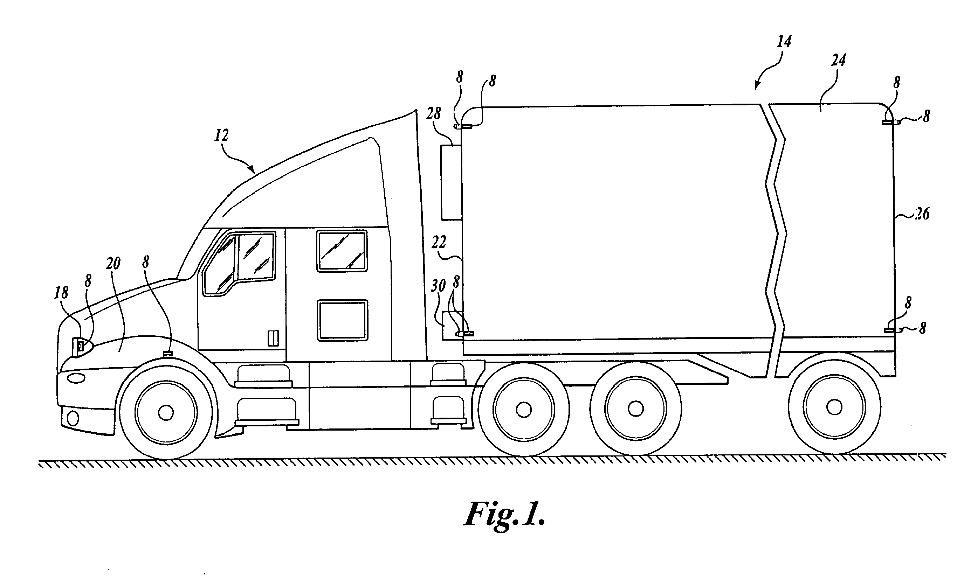

A self-powered auxiliary light, or signaling device 8, constructed in accordance with one embodiment of the present disclosure is best seen by referring to FIGURE 1. The signaling device 8 is shown in use with a Class 8 truck 10 having a tractor 12 and a trailer 14 connected thereto. Although the signaling device 8 is illustrated as associated with a Class 8 vehicle, it should be appreciated that the use of the signaling device 8 is not intended to be so limited. For instance, the signaling device 8 may be used on recreational vehicles, boats, cars, tractors, trailers, or other devices, such as containers, or machines that necessitate the use of a warning signal. As such, the present disclosure should be construed broadly to include such embodiments.

From time to time throughout this specification, directional terms, such as top, bottom, forward, rearward, etc., are used in the description of various components. It should be apparent that the use of such terms is merely for convenience and, as such, is not intended to limit the embodiments or claims contained herein.

Referring to FIGURE 1, the truck 10 includes a plurality of signaling devices 8 positioned at various locations on the tractor 12 and the trailer 14. Depending on the size and the design of the truck 10, the signaling devices 8 are strategically positioned on the truck 10 such that a third party may substantially depict the outline of the truck 10 in a low lighting situation. On the other hand, the signaling devices 8 may be placed only on certain corners of the truck 10.

In the one embodiment, the truck 10 includes at least one signaling device 8 on each headlight 18 and on each front fender 20. The trailer 14 may also include at least one signaling device 8 positioned at suitable locations on the trailer 14, such as the corners of the trailer front wall 22, side walls 24, and rear wall 26. Without departing from the scope of the present disclosure, signaling devices 8 may be placed at additional locations as desired.

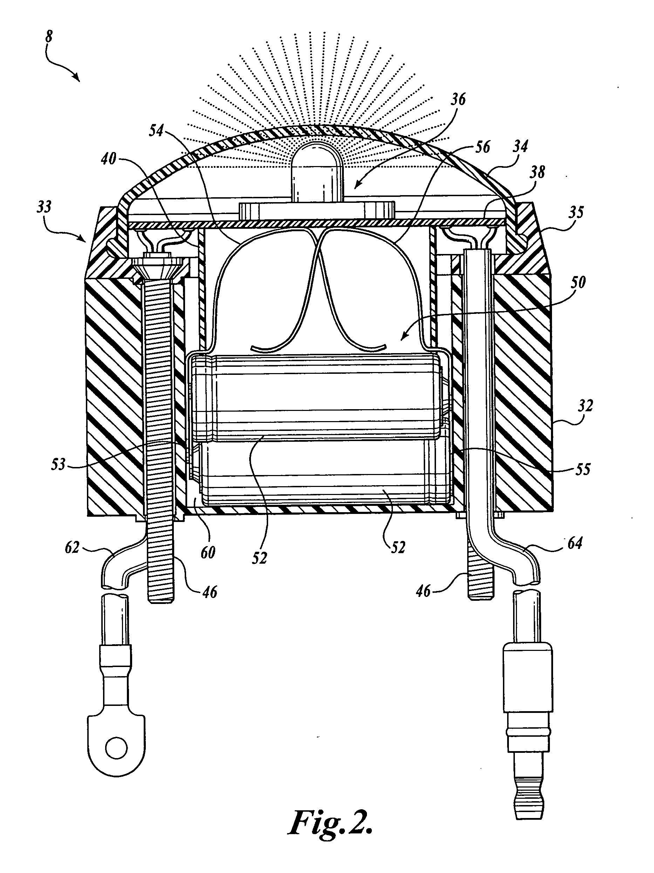

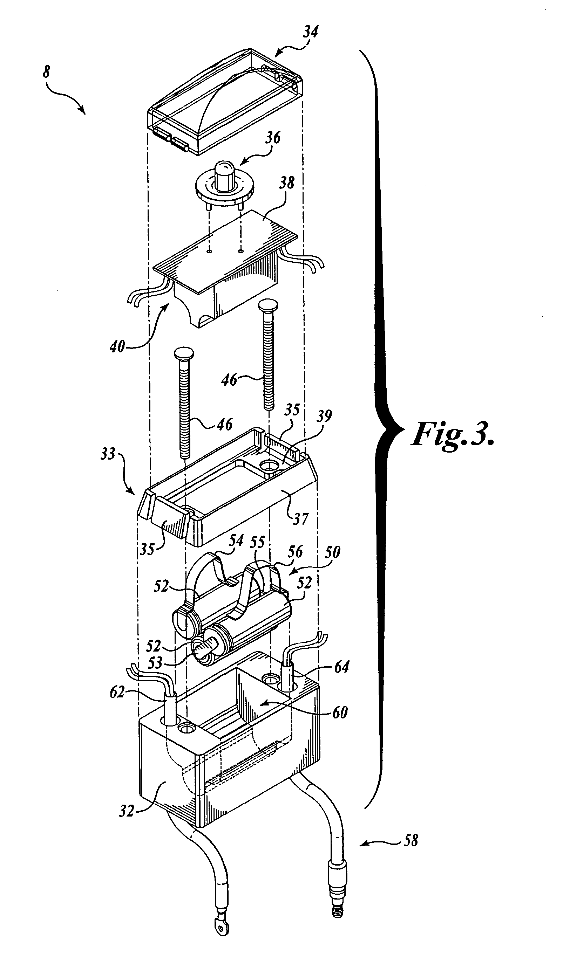

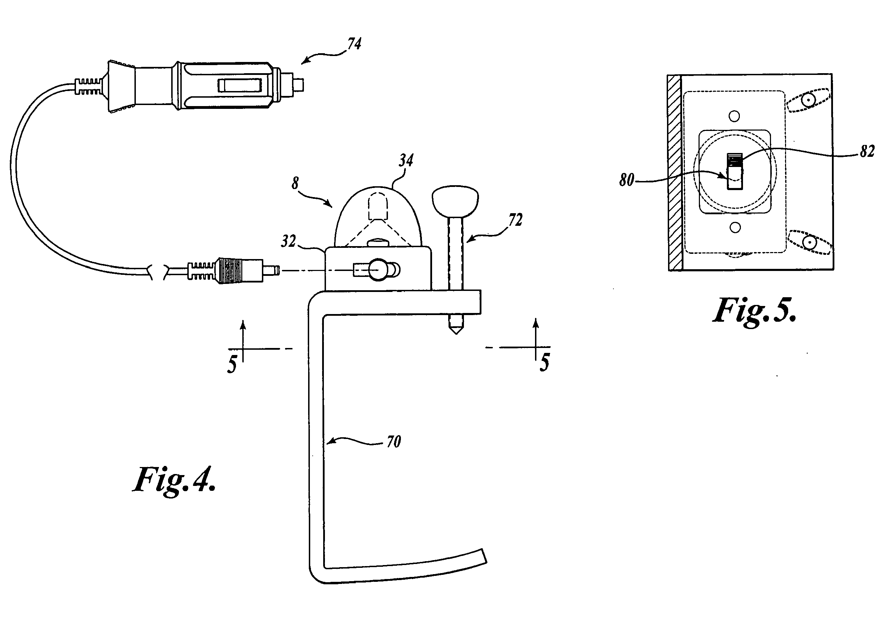

As may best seen by referring to FIGURES 2 and 3, the signaling device 8 includes a housing 32 and a lens bezel 33. A lens 34 is secured within the lens bezel 33 for enclosing a light emitting source disposed therewithin. The housing 32 is mountable to the truck 10 in a desired location by any suitable method. For example, a fastener, adhesive, magnet, clamp, etc. may be used to secure the signaling device 8 to the truck 10. The signaling device 8 may be temporarily secured to the truck 10, or may instead be permanently coupled to the truck 10 for extended use. One temporary attachment device is described in greater detail with reference to FIGURE 4.

As best seen by referring to FIGURE 3, the housing 32 is generally rectangular and includes a cavity 60. The cavity 60 is suitably sized and configured to house an energy source. Preferably, the energy source is a battery pack 50, such as a plurality of AA nickel metal hydride (NiMH) or lithium ion rechargeable batteries known to one of ordinary skill in the art. As illustrated, the battery pack 50 is connected in series with first and second jumpers 53 and 55 (see also FIGURE 2).

First and second contact springs 54 and 56 extend upwardly from the batteries 52. Although a battery pack 50 is illustrated and described as a preferred energy source, it should be apparent that other types of energy sources are within the scope of the present disclosure. As such, other types of energy sources, such as an ultracapacitor (not shown) or ultracapacitors in series, are also within the scope of the present disclosure.

The lens bezel 33 is generally the same cross-sectional size and shape as the housing 32. The lens bezel 33 includes a generally rectangular base 39 and a rim 37 formed around the perimeter of the base 39. The base 39 of the lens bezel 33 includes an opening that substantially aligns the opening defined by the cavity 60 when the lens bezel 33 is mounted to the housing 32. The rim 37 of the lens bezel 33 includes at least two semi-flexible portions 35, or tabs, disposed opposite one another along the edge of the bezel 33. Each semi-flexible portion 35 includes a lip for receiving the lens 34.

The lens bezel 33 is mounted to the upper surface of the housing 32 in any suitable manner. Preferably, fasteners 46 pass through the lens bezel base 39 and are received into the housing 32, as shown in FIGURE 2. The same fasteners 46 may be used for mounting the signaling device 8 to the truck 10. It should be appreciated that other methods of fastening the lens bezel 33 to the housing 32 may also be used. As a non-limiting example, the bezel 33 may be snap fit onto the housing 32.

Referring back to FIGURE 3, if a rechargeable battery pack 50 is used as the energy source, the signaling device 8 includes a battery charger 40 having conventional charging circuitry. Any low-current battery charger 40 that is suitable for charging a battery pack 50 may be used. The battery charger 40 is sized and shaped such that it is received within the opening in the lens bezel 33 and engages the battery pack 50 between the first and second contact springs 54 and 56.

A printed circuit board (PCB) 38 is electrically coupled to the upper surface of the battery charger 40 and is in communication with the charger circuitry. As shown in FIGURE 2, the PCB 38 is at least partially received within the bezel 33 such that a portion of the PCB bottom surface engages the first and second contact springs 54 and 56 of the battery pack 50. The bottom of the PCB 38 includes contacts (not shown) of a suitable material for placing the battery pack 50 into electrical communication with the PCB 38. If an ultracapacitor is instead used, the PCB 38 is electrically connected to the ultracapacitor.

Referring to FIGURES 2 and 3, the signaling device 8 includes a light emitting source, such as at least one light emitting diode (LED) 36. One suitable LED 36 is mounted to the top surface of the PCB 38 and is placed into electrical communication with the circuitry in the PCB 38.

The lens 34 is received within the lens bezel 33 to enclose the LED 36 within the signaling device 8. The lens 34 is preferably formed from a translucent, transparent, or reflective plastic material so that the light emanating from the LED 36 projects outwardly through the lens 34.

The lens 34 is received within the bezel 33 in any well-known manner. Preferably, the lens 34 includes suitably positioned projections formed on the side of its rectangular base for engaging the lips on the semi-flexible portions 35. As the lens 34 is lowered within the bezel 33, the projections on the lens 34 engage the semi-flexible portions 35 and urge them outwardly until the projections are secured beneath the lips, thereby locking the lens 34 into place within the bezel 33.

The signaling device 8 is electrically connected to the truck electrical system or any external electrical system to which the truck is electrically connected (not shown). The truck electrical system includes the electrical system of both the tractor 12 and the trailer 14, either individually or collectively. The signaling device 8 on the tractor 12 are preferably electrically connected to the tractor electrical system (not shown), which may include but is not limited to the exterior lighting system, the interior lighting system, the hotel electrical system, the dashboard electrical system, etc.

In certain embodiments, the signaling device 8 may be electrically coupled to the vehicle electrical system by replacing existing lighting fixtures, such as trailer lamps, without requiring modification to the existing wiring. Although such attachments are preferred, it should be apparent that other types of attachments, such a dedicated electrical system, are also within the scope of the present disclosure. Also, a signaling device 8, regardless of how it is attached to the vehicle, having its own dedicated power source, such as batteries, requiring no coupling to the vehicle electrical circuitry is also within the scope of the present disclosure.

The signaling devices 8 located on the trailer 14 may be electrically connected to the electrical system of the trailer 14 if it has its own electrical system. For instance, if the trailer 14 is refrigerated, the trailer 14 will include a refrigeration unit 28 and a refrigeration battery 30. Notwithstanding the location of the signaling device 8, it may be electrically connected to either the electrical system of the tractor 12 or the trailer 14, or both.

The signaling device 8 includes a suitable electrical connector assembly 58 for electrically connecting the signaling device 8 to the vehicle electrical system. The electrical connector assembly 58 preferably includes a pair of wires 62 and 64, with one wire supplying power to signaling device 8 and the other wire connected to ground. The ends of the wires are soldered to the underside of the PCB 38 and are electrically connected to the PCB 38. The wires 62 and 64 of the electrical connector assembly 58 pass through openings formed in the bezel 33 and the housing 32 and exit out of the bottom of the housing 32 of the signaling device 8 to be connected to the truck electrical system. Any suitable electrical connector may be supplied at the end of each wire 62 and 64 for placing the signaling device 8 into electrical communication with the truck electrical system.

The circuitry of the PCB 38 is designed to place the vehicle electrical system into electrical communication with the components of the signaling device 8. The PCB circuit may be designed such that when the vehicle electrical system is supplying power to the signaling device 8, the battery charger 40 charges the battery pack 50 and the LED 36 receives power from the vehicle electrical system and/or the battery pack 50, depending on the operational conditions of the truck 10. When the vehicle electrical system is not supplying power to the signaling device 8, the LED 36 receives power from the battery pack 50 and continues to emit light.

Similarly, if an ultracapacitor is instead used, the PCB circuit may be designed such that when the vehicle electrical system is supplying power to the signaling device 8, the power from the vehicle electrical system charges the ultracapacitor and the LED 36 receives power from the vehicle electrical system and/or the ultracapacitor. When the vehicle electrical system is not supplying power to the signaling device 8, the LED 36 receives power from the ultracapacitor and continues to emit light.

Based on the foregoing, the LED 36 of the signaling device 8 draws current from the charged battery pack 50 or ultracapacitor and continues to emit light when the vehicle electrical system is not supplying power to the signaling device 8. Thus, the signaling device 8 does not continue to draw current from the vehicle electrical system, thereby ensuring that the vehicle battery will remain charged and the truck 10 will reliably start when needed. Moreover, the LED 36 continuously produces light regardless of whether the signaling device 8 is receiving power from the vehicle. As a result, the signaling device 8 continuously provides warnings to others, and safety is increased.

As may be best seen by referring to FIGURE 5, the signaling device 8 may be attached to a vehicle by a temporary fastener or coupler. One such fastener is illustrated as a clamp 70. The clamp 70 is sized and configured as necessary to fit on a vehicle and is removably coupled by a pin 72. In operation, when the vehicle is parked, the signaling device 8 may be removed from storage and placed on the vehicle at any desired location. The pin 72 is tighten to hold the signaling device 8 as necessary. After use, the pin 72 is released and the signaling device 8 is removed from the vehicle and placed back into storage.

In this embodiment, the battery pack 50 could be charged through an external battery charger 74 when the signaling device 8 is not needed. The signaling device 8 could include a power charging connector, and the signaling device 8 could be returned to the truck when not in use and plugged into a DC receptacle for recharging.

In still yet another alternate embodiment, the signaling device 8 includes a battery pack 50, but it does not include an electrical connector assembly 58 or a battery charger 40. Such an embodiment may be best understood by referring to FIGURE 5. The signaling device 8 includes a momentary switch 80. The switch 80 is used to place the battery pack 50 into electrical communication with the PCB 38 and the LED 36. The switch 80 is disposed between the battery pack 50 and the PCB 38 and is actuable into an "on" or "off" state by activating the switch lever 82 (turning the LED 36 on or off).

The switch 80 would be turned "on" before mounting the signaling device 8 to the vehicle 10. In this manner, the battery pack power would be preserved when the signaling device 8 is not in use. This type of signaling device 8 would likely be disposable, being used only until the battery pack power is depleted.

While illustrative embodiments have been illustrated and described, it will be appreciated that various changes can be made therein without departing from the spirit and scope of the invention. As a non-limiting example, the LED 36 can be switched "off" when the signaling device 8 is being charged. As another non-limiting example, it is contemplated that the signaling device 8 may be in the "off" condition when the vehicle is in operation or when it is stored or otherwise packaged for sale. The device 8 may automatically be actuated into the "on" condition in the absence of a charge. Finally, the device 8 may also include an activation switch to activate the device 8 prior to installation on a vehicle. As such, the appended claims should be construed broadly to include at least the foregoing examples.

The embodiments of the invention in which an exclusive property or privilege is claimed are defined as follows:

## Claims

1. A signaling device for temporary use with a vehicle having an exterior and a vehicle electrical system, the signaling device comprising:
(a) a housing;
(b) an energy source disposed within the housing;
(c) a light emitting source in electrical communication with the energy source; and
(d) a coupler attached to the housing, the coupler adapted to releasably attach the signaling device to the exterior of the vehicle.

2. The signaling device of Claim 1, further comprising a switch for selectively placing the energy source into electrical communication with the light emitting source.

3. The signaling device of Claim 1, further comprising a connector assembly for placing the energy source into electrical communication with the vehicle electrical system.

4. The signaling device of Claim 3, wherein the connector assembly is a battery charger adapted to place the energy source into electrical communication with the vehicle electrical system.

5. The signaling device of Claim 1, wherein the light emitting source is powered by either the vehicle electrical system or the energy source.

6. The signaling device of Claim 1, wherein the light emitting source is a light-emitting diode.

7. A signaling device for temporary use with a vehicle having an exterior and a vehicle electrical system, the signaling device comprising:
(a) a housing;
(b) a battery disposed within the housing;
(c) a light emitting source in electrical communication with the battery and the vehicle electrical system; and
(d) a coupler attached to the housing and adapted to releasably fasten the signaling device to the exterior of the vehicle.

8. The signaling device of Claim 7, further comprising a battery charger adapted to be placed into electrical communication with the battery.

9. The signaling device of Claim 7, further comprising a switch for selectively placing the energy source into electrical communication with the light emitting source.

10. A signaling device for temporary use with a vehicle having an exterior and a vehicle electrical system, the signaling device comprising:
(a) a housing;
(b) an energy source disposed within the housing;
(c) a light emitting source disposed within the housing;
(d) a momentary switch for placing the light emitting source into electrical communication with the energy source; and
(e) a clamp assembly attached to the housing and adapted to selectively couple the signaling device to the exterior of the vehicle.

11. The signaling device of Claim 10, further comprising a power charging connector adaptable for placing the energy source into electrical communication with the vehicle electrical system to recharge the energy source.
